# EUROPEAN PATENT APPLICATION

(11) **EP 1 264 810 A1**
(43) Date of publication of application: **11.12.2002**
(21) Application number: 01912279.5
(22) Date of filing: 12.03.2001
(51) Int. Cl.: C04B 35/66

(54) **MONOLITHIC REFRACTORY FOR WASTE PYROLYSIS FURNACE AND WASTE PYROLYSIS FURNACE USING THE SAME**

(30) Priority: 14.03.2000 JP 2000076411; 22.03.2000 JP 2000084758
(71) Applicant: Krosakiharima Corporation, Kitakyushu-shi, Fukuoka 806-8586 (JP)
(72) Inventor: ISOBE, Toshihiro, c/o Krosakiharima Corporation, Kitakyushu-shi, Fukuoka 806-8586 (JP); SHIOMORI, Masahiro, c/o Krosakiharima Corporation, Kitakyushu-shi, Fukuoka 806-8586 (JP)
(74) Representative: Goddar, Heinz J., Dr.
(86) International application number: JP0101923
(87) International publication number: WO01068555

(57) **Abstract**

A castable refractory for waste melting furnaces, which comprises a refractory aggregate containing 5 to 50 mass % of magnesia and a balanced amount of a material mainly comprised of alumina, a bonding agent and a dispersant, wherein 50 mass % or more of the above magnesia has particles whose surface is coated with an organic silicon compound. It is preferred that a part or the whole of the binder is an aluminum oxycarboxylate, that the organic silicon compound is a silicone oil and that the refractory aggregate further contains a volatile silica in an amount of 2 mass % or less. The castable refractory for use in a waste melting furnace is of an alumina-magnesia material which is free of chromium and thus free from environmental pollution and also has significantly improved durability.

## Description

### TECHNICAL FIELD

The present invention relates to a non-chromium castable refractory used in linings of waste melting furnaces, and a waste melting furnace comprising a lining formed of this refractory.

### BACKGROUND ART

There have heretofore been various waste melting-treatment processes, such as a process of directly melting a solid waste material, a process of burning a waste material in an incinerator or pyrolysis furnace and then melting the resulting ash, and a process of smothering a waste material and simultaneously melting the waste material using combustible gas resulting from the smothering as fuel.

Generally, a melting furnace used in the. melting treatment for waste materials (hereinafter referred to as "waste melting furnace") includes a lining made of a chromium-containing refractory in which chromic oxide is added in consideration of corrosion resistance. The chromic oxide can create a solid solution through a reaction with a refractory aggregate such as alumina to provide enhanced heat resistance of the refractory. During use of the refractory, the chromium component also liquates out to make the viscosity of a slag higher and advantageously prevent the slag from infiltrating.

On the other hand, the chromic oxide in the chromium-containing refractory changes into sexivalent chrome under high temperature, and the sexivalent chrome harmful to humans will bring pollution to the slag, resulting in undesirable environmental problems in disposal of the slag. From this point of view, an alumina-magnesia castable refractory (Japanese Patent Laid-Open Publication No. 7-256229) is proposed to provide a non-chromium castable refractory.

The alumina-magnesia castable refractory creates MgO·Al₂O₃ spinel (hereinafter referred to as "spinel") through a reaction between alumina and magnesia under high temperature during use to densify the refractory texture and effectively provide excellent corrosion resistance.

In terms of CaO/SiO₂ (mass ratio) in slag components, the ratio of a melting-furnace slag resulting from the treatment of domestic waste materials in urban districts or the like is about 0.1 to 2. This value is lower than that of a molten-steel slag generated in a molten-steel vessel of steel plants. Typically, the melting-furnace slag also includes alkali components, such as Na₂O or K₂O contained in waste materials, in an amount of 3 to 10 mass %.

The melting-furnace slag has a significantly low viscosity at a temperature in the range of 1100 to 1500°C for operating a waste melting furnace, due to the low CaO/SiO₂ ratio and the inclusion of a large amount of alkali components. Thus, the conventional alumina-magnesia castable refractory is involved with marked slag infiltration caused by low viscosity peculiar to the melting-furnace slag, and thereby its durable life is not satisfactory.

### DISCLOSURE OF THE INVENTION

It is therefore an object of the present invention to improve the durable life of a castable refractory for waste melting furnaces or a non-chromium alumina-magnesia castable refractory free from environment pollution.

The present invention provides a castable refractory for waste melting furnaces, comprising a refractory aggregate containing 5 to 50 mass % of magnesia with the remainder being primarily alumina, and more added a bonding agent and a dispersing agent, wherein 50 mass % or more of the magnesia is composed of magnesia particles each having a surface coated with a organic silicon compound.

It has already known to prepare magnesia composed of magnesia particles each having a surface coated with an organic silicon compound and then apply the magnesia to a refractory aggregate, in Japanese Patent Laid-Open Publication Nos. 8-157268 and 11-310473. This conventional technique is intended to shield the magnesia from water admixture by the organic silicon compound coating so as to improve slaking resistance of refractory itself.

Since the magnesia coated with the organic silicon compound is also used in the present invention, the improved slaking resistance as described above can be effectively utilized when the refractory has to be left for a long time after construction, for example, several months, until actual work.

In the present invention, an alumina-magnesia castable refractory using the magnesia coated with the organic silicon compound is applied to a lining of a waste melting furnace as an objective of the present invention. This solves the problems caused by a low viscosity slag peculiar to waste melting furnaces and brings out excellent corrosion resistance and slag-infiltration resistance.

During the operation of waste melting furnaces, the temperature of the melting-furnace slag is 1500°C or less, typically in the range of 1100 to 1400°C. This value is lower than the operational temperature in the range of 1600 to 1800°C of molten-steel vessels or the like.

The spinel reaction between alumina and magnesia is significantly slowed down in the temperature range of 1500°C or less, and thereby the effect of the densified refractory texture obtained from cubical expansion in conjunction with spinel formation will be degraded.

In the present invention, a silicon component in the organic silicon compound on the surfaces of the magnesia particles reacts with refractory aggregate components or slag components to create SiO₂-based fusible substance such as SiO₂·CaO·Al₂O₃. The created SiO₂-based fusible substance promotes diffusion of the magnesia components and facilitates a gas phase reaction for forming spinel between the alumina and the magnesia. Thus, even in the waste melting furnace operated at relatively low temperature, the spinel forming reaction can be sufficiently activated to provide adequately densified refractory texture and excellent slag-infiltration resistance against the low viscosity slag peculiar to melting furnaces. This also provides enhanced corrosion resistance.

The SiO₂-based fusible substance can be created by adding a silica fine powder. Differently from the organic silicon compound located on surfaces of the magnesia particles, the added silica fine powder is dispersed in the refractory texture. In addition, the silica powder has a larger particle size and a lower reactivity than those of SiO₂ components from the organic silicon compound.

Thus, if it is intended to create the SiO₂-based fusible substance and form spinel only by adding the silica fine powder, a good amount of silica fine powder is required. This excessively raises the proportion of the created SiO₂-based fusible substance to the entire refractory texture, resulting in deteriorated corrosion resistance.

In combination with the magnesia coated with the organic silicon compound, an aluminum oxycarboxylate can be effectively used as the bonding agent to provide further enhanced slag-infiltration resistance. It is know to use an aluminum oxycarboxylate as a bonding agent for refractories (Japanese Patent Laid-Open Publication Nos. 4-243980 and 9-67170). It is also known that the aluminum oxycarboxylate is advantageously transformed into alumina by receiving heat during use of a refractory to densify the refractory texture.

The present invention can fundamentally bring out the effect in which the organic silicon compound coated on the magnesia facilitates spinel formation in low temperature range to provide enhanced slag-infiltration resistance against the low viscosity slag peculiar to melting furnaces, and significantly enhanced corrosion resistance can be additionally provided by combinationally use the aluminum oxycarboxylate.

This effect would be obtained by the following reason. When an alumina-magnesia refractory is used in a molten-steel vessel or the like, the temperature of molten steel in the vessel is 1600°C or more, and on the surface of the refractory lining in contact with the molten steel, magnesia fine-particles react with alumina to transform to spinel in the entire particle.

In contrast, the temperature of a slag in a melting furnace is 1500°C or less, typically in the relatively lower temperature range of 1100 to 1400°C. Thus, the spinel forming reaction is limitedly caused at each outer peripheral region of magnesia particles even in fine particles. On the other hand, the aluminum component in the aluminum oxycarboxylate is oxidized to create fine alumina particles. Then, with the aid of the SiO₂-based fusible substance created from the organic silicon compound, magnesia particles react with the fine alumina particles created from the aluminum oxycarboxylate to facilitate spinel formation at each outer peripheral region of the magnesia particles.

Magnesia has fairly higher corrosion resistance against alkali components of the melting-furnace slag than spinel. In the present invention, while the spinel formation is facilitated by the aluminum oxycarboxylate, the fine magnesia particles constituting a matrix remain in non-spinel state. This effectively brings out excellent corrosion resistance against the melting-furnace slag containing a large amount of alkali components.

Further, in the refractory of the present invention, the refractory aggregate may contain a volatile silica in an amount of 2 mass % or less to provide further enhanced corrosion resistance against the melting-furnace slag. This effect would be obtained by the following reason.

The reaction between the magnesia and water admixture causes hydration swelling at the surface of the magnesia, and particles of the refractory aggregate are subjected to thermal expansion under high temperature. Thus, the organic silicon compound can be peeled off from the surface of the magnesia by the stress from the hydration swelling or the thermal expansion.

The volatile silica is an amorphous ultra fine powder comprised of an agglutination of submicron particles. The volatile silica comprised of the agglutination of submicron particles is broken down by the stress from the hydration swelling or the thermal expansion, and this breakdown desirably acts to release the stress so as to prevent the organic silicon compound on the surfaces of the magnesia particles from being peeled off.

The magnesia used in the present invention may include sintered magnesia, fused magnesia, light-burned magnesia, and natural magnesia. Among them, the sintered magnesia or fused magnesia having a purity of 90 mass % or more is preferable.

In terms of a ratio of the magnesia to the refractory aggregate, the ratio less than 5 mass % results in deteriorated corrosion resistance, and the ratio greater than 50 mass % causes lowered spalling resistance and structural deterioration due to excessive spinel formation. The ratio of the magnesia is arranged in the range of 12 to 50 mass % to distinguish the effect on alkali resistance in the magnesia.

Alumina is used as a refractory aggregate excellent in volume stability, and is effective to provide spalling resistance. A specific example may include sintered alumina, fused alumina, bauxite, aluminous shale, and calcined alumina. Preferably, the sintered alumina, fused alumina, or calcined alumina having an Al₂O₃ purity of 90 mass % or more is used. The calcined alumina is used in the form of fine powder because its particle is originally fine powder.

The alumina occupies a primary part of the remainder in the refractory aggregate. In order to obtain the effect of volume stability in the alumina, a ratio of the alumina to the refractory aggregate is 50 mass % or more, preferably in the range, for example, of 50 to 95 mass %.

In addition to the above magnesia and alumina, the refractory aggregate used in the present invention may use any other suitable refractory material as the remainder left by the magnesia, in combination with the alumina insofar as the effects of the present invention are spoiled. For example, a usable material includes MgO·Al₂O₃ spinel, mullite, silica, and clay.

While the particle size of the refractory aggregate is not limited to a particular value, it may be appropriately adjusted in coarseness, medium, fineness in the range of 8 mm or less, preferably 5 mm or less to facilitate densification of the refractory texture.

In terms of the particle size of the magnesia, it is desirable that 5 to 20 mass % of the magnesia has a particle size of 0.075 mm or less, where the mass % is a ratio of the magnesia to the refractory aggregate. If the magnesia which particle size is under 0.075 mm is less than 5 mass %, the slag-infiltration resistance tends to deteriorate. The magnesia is more than 20 mass % causes the tendency of degradation in strength of the refractory due to unbalanced particle sizes in the entire refractory aggregate.

The present invention uses the magnesia particles each a surface coated with the organic silicon compound. The amount of the organic silicon compound coating in SiO₂ equivalent is in the range of 0.001 to 2.0 mass %, preferably in the range of 0.005 to 0.5 mass %.

A method for coating organic silicon compound may comprise the steps of mixing with organic silicon compound as it is or an organic solvent such as alcohol dissolved therein with magnesia, drying the resulting mixture, for example, at 120°C or more, and optionally subjecting to heat treatment at a temperature in the range of 200 to 500°C, preferably in the range of 350 to 450°C.

A specific example of the organic silicon compound may include silicone, silane coupling agent, alkoxysilane, and silylation agent. Among them, it is preferable to use silicone oil which includes a large amount of residual SiO₂ component and provides a reliable coating layer. The silicone oil may include methyl hydrogen silicone oil, and dimethyl silicone oil.

The silane coupling agent may include vinyltrichlorsilane, vinyltriethoxysilane, vinyltrimethoxysilane, vinyltris (β methoxyethoxy) silane, γ - methacryloxy propyl trimethoxysilane, γ-aminopropylethoxysilane, and γ-mercaptopropyltrimethoxysilane.

The alkoxysilane may include tetraethoxysilane, and tetramethoxysilane, methyltriethoxysilane.

The silylation agent may include trimethylchlorosilane, and hexamethyldisilazane.

Given that magnesia used in the present invention is 100 mass %, the organic silicon compound is coated on the magnesia of 50 mass % or more, preferably 80 mass % or more. If the coated magnesia is arranged to be less than 50 mass %, the present invention cannot be obtained the intended corrosion resistance and slag-infiltration resistance.

A fine particle has a large specific surface area, and thereby the entire area of the fine powder coated with the organic silicon compound will become large. This significantly facilitates forming the spinel which makes a contribution to the effect of enhancing corrosion resistance in the present invention. Thus, it is desired to coat the organic silicon compound on fine magnesia particles each having a particle size of 1 mm or less, preferably 0.075 mm or less.

The bonding agent may be one or more of materials selected from the group consisting of alumina cement, magnesia cement, portland cement, hydraulic cement, oxycarboxylate aluminum, phosphate, silicate, silica sol and phenol resin.

A ratio of the bonding agent to be added may be appropriately adjusted to be 10 mass % or less, preferably 5 mass % or less, on the basis of 100 mass % of the refractory aggregate, depending on the type of the bonding agent.

In view of the intended corrosion resistance of the present invention, a part or entire of the above bonding agent is preferably oxycarboxylate aluminum. A specific example of the oxycarboxylate aluminum includes basic aluminum lactate, aluminum glycolate, aluminum malate, aluminum tartrate, and aluminum citrate. It is preferable to use Al₂O₃/oxycarboxylate at a mole ratio in the range of 0.3 to 2.

The amount of the oxycarboxylate aluminum to be added is preferably 3 mass % or less, more preferably in the range of 0.1 to 2 mass %, on the basis of 100 mass % of the refractory aggregate.

When oxycarboxylate aluminum is used, any other suitable bonding agent may be combinationally used. For example, it may be used in combination with alumina cement. In this case, it is desired that the entire amount of the bonding agent including the alumina cement should be limited within 5 mass %. Even if other bonding agent is combinationally used, it is desirable to add the oxycarboxylate aluminum in an amount of at least 0.1 mass % or more.

The dispersing agent is effective to provide flowability when the refractory is applied. The dispersing agent is also known as a deflocculant.

A specific example of the dispersing agent may include hexametaphosphate soda, tripolyphosphate soda, pyrophosphate soda, ultra polyphosphate soda, acid-hexametaphosphate soda, borate soda, sal soda, citrate soda, tartrate soda, polyacrylate soda, sulfonate soda, and polycarboxylate. The amount of the dispersing agent to be added is preferably in the range of 0.05 to 0.5 mass %, on the basis of 100 mass % of the refractory aggregate.

An additionally usable addition may include volatile silica, accelerator, retardant, antifoamer, refractory ultracoarse particle, organic short fiber, metal short fiber (e.g. steel fiber, stainless steel fiber), glass powder, pitch powder, ceramic fiber, carbon fiber, foaming agent, metal aluminum, and aluminum alloy, according to need.

The volatile silica is particularly preferable among them. For example, the volatile silica can be obtained as a by-product in the manufacturing process of silicon or silicon alloy. The volatile silica is generally referred to as silica flower or microsilica. The volatile silica is composed of an aggregate of spherical submicron particles and the average size of the aggregated volatile silica is in the range of about 15 to 1 µm. The amount of the volatile silica to be added is preferably 2 mass % or less, more preferably in the range of 0.1 to 2 mass %, on the basis of 100 mass % of the refractory aggregate. The magnesia greater than 2 mass % causes degradation of slag-infiltration resistance assumably due to suppressed spinel formation.

The organic short fiber is thermally evanished during a drying process by heating after construction to form an escape path for water vapor generated in the drying process and effectively prevent the refractory body from swelling or explosively fracturing.

A specific example of the organic short fiber may include PVA, vinylon, polypropylene, nylon, and polyester, having a length in the range of about 1 to 10 mm. A ratio of the organic short fiber to be added is preferably in the range of 0.05 to 0.5 mass %, on the basis of 100 mass % of the refractory aggregate.

The refractory ultracoarse particle may a refractory raw material or a refractory used material containing a primary component such as alumina, alumina-silica or spinel, have a particle size in the range of about 10 mm to 50 mm. The refractory ultracoarse particle is effective to provide spalling resistance and other. A ratio of the refractory ultracoarse particle to be added is, for example, 40 mass % or less, preferably in the range of 5 to 30 mass %, on the basis of 100 mass % of the refractory aggregate.

A construction of a lining composed of the castable refractory according to the present invention may be carried out by mixedly adding 2 to 7 mass % of water on the basis of 100 mass % of the entire refractory composition, and casting by use of a former. During application, the mixed material is tightly charged by use of a vibrator.

The refractory according to the present invention can be used as a lining for bottom, furnace sidewall, tuyere, trough, ceiling in a waste melting furnace. The application may be directly casted the refractory into each region of the furnace or may be laid up using blocks each formed in a given shape and size in advance by casting the refractory into molds.

The waste melting furnace is not limited to a particular type, and can be applied to a type using gas or oil as fuel, or a type of melting waste materials by electrically heating with arc, plasma, heat generator, induction heating or the like.

Waste materials to be treated by this melting furnace may include domestic waste such as waste and sewage sludge in urban districts, and industrial wastes. The waste materials may be original of waste material or ash from an incinerator or pyrolysis furnace, and smothered wastes.

### BEST MODE FOR CARRYING OUT THE INVENTION

Examples of the present invention (inventive examples) and comparative examples are shown in Tables 1 and 2. The Tables 1 and 2 include their test results.

The organic silicon compound coated on the magnesia used in the respective examples was organic silicone oil and silane coupling agent. Specifically, the silicone oil was used methyl hydrogen silicone oil by dissolving in 3 mass % of ethanol in advance.

The organic silicon compound coating was formed by adding organic silicon compound in magnesia, and agitating and mixing the mixture by a Henschel mixer for five minutes while heating at 50°C and dried at 120°C, and then followed by subjecting to thermal treatment at 400°C.

The amount of the organic silicon compound coated on the magnesia particles in SiO₂ equivalent was in the range of 0.08 to 0.15 mass %.

In these examples, basic aluminum lactate was used as the aluminum oxycarboxylate serving as a bonding agent.

Each of test pieces in these examples was prepared by adding and mixing water of 4 mass % on the basis of 100% of the entire refractory composition into the refractory mixture, casting the refractory mixture with applying vibration, and aging and drying the casted refractory at 110°C for 24 hours. The test methods were as follows.

Corrosion Resistance: Assuming a waste melting furnace, a rotary erosion test was performed using a waste material slag in urban districts (CaO/SiO₂: 0.65, amount of alkali: 5 mass %) as a corrosive agent at 1400°C. On the other hand, assuming a molten-steel vessel, a rotary erosion test was performed using a molten-steel slag (CaO/SiO₂: 3, amount of alkali: none) at 1600°C. The actual value of wear loss was measured in each test. The wear loss value is represented by an index calculated on the basis of the measured value of Comparative Example-1 defined as 100. A bigger numerical value in Tables means lower corrosion resistance.

Slag-Infiltration Resistance: After the above rotary erosion test, the actual value of slag infiltration into the refractory body was measured. The measured value is represented by an index calculated on the basis of the measured value of Comparative Example-1 defined as 100. A bigger numerical value in Tables means larger slag infiltration.

Test in Actual Furnace: Some of Inventive Examples and Comparative Examples were actually casted over the bottom of a gasifying melting furnace by use of a former to cast the refractories. During application, each of the refractories mixture was tightly charged by use of the vibrator. After aging and drying by heating, the furnace was operated for three months. The actual value of wear loss (mm/month) was measured as a parameter of durable life.

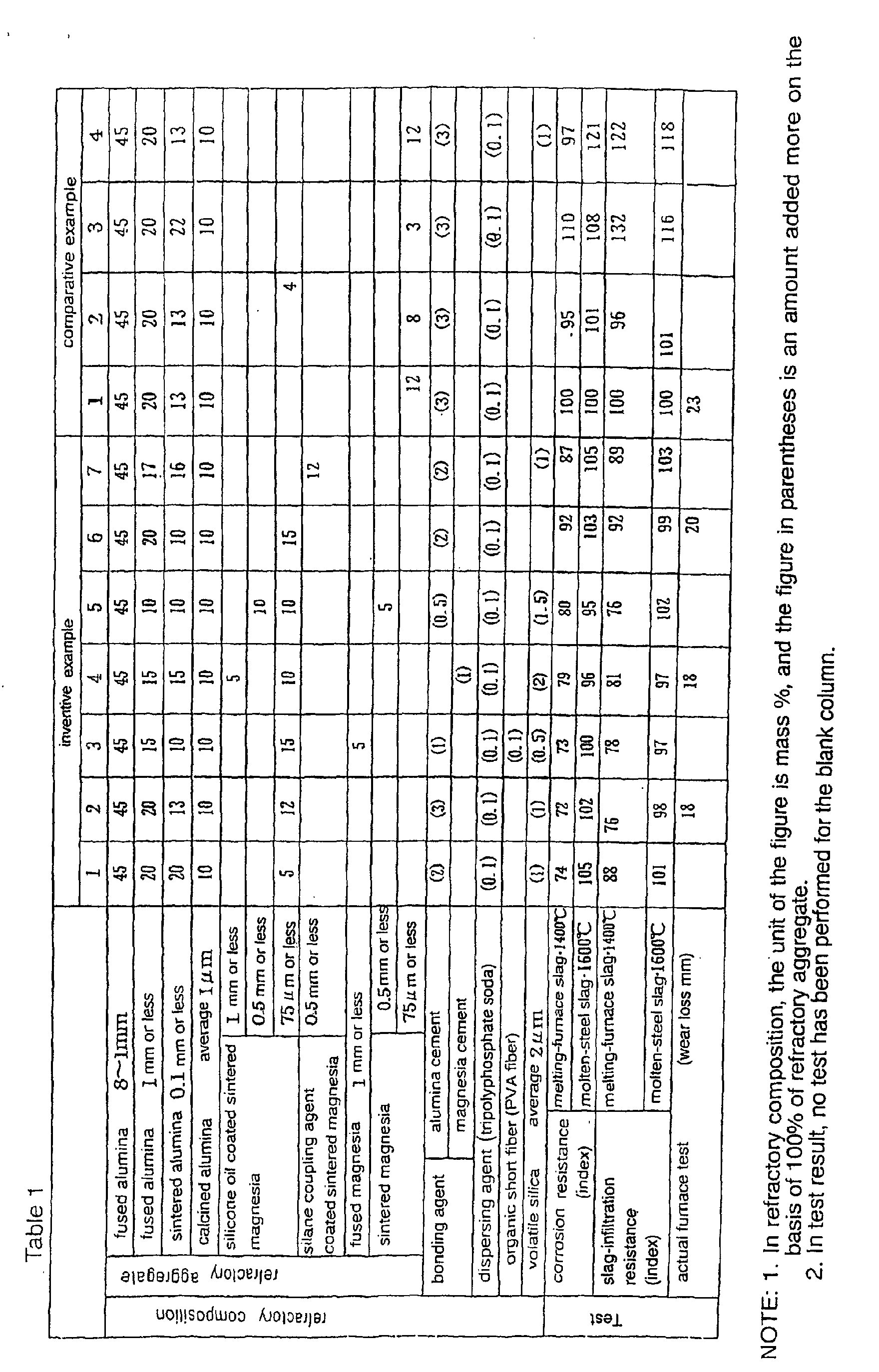

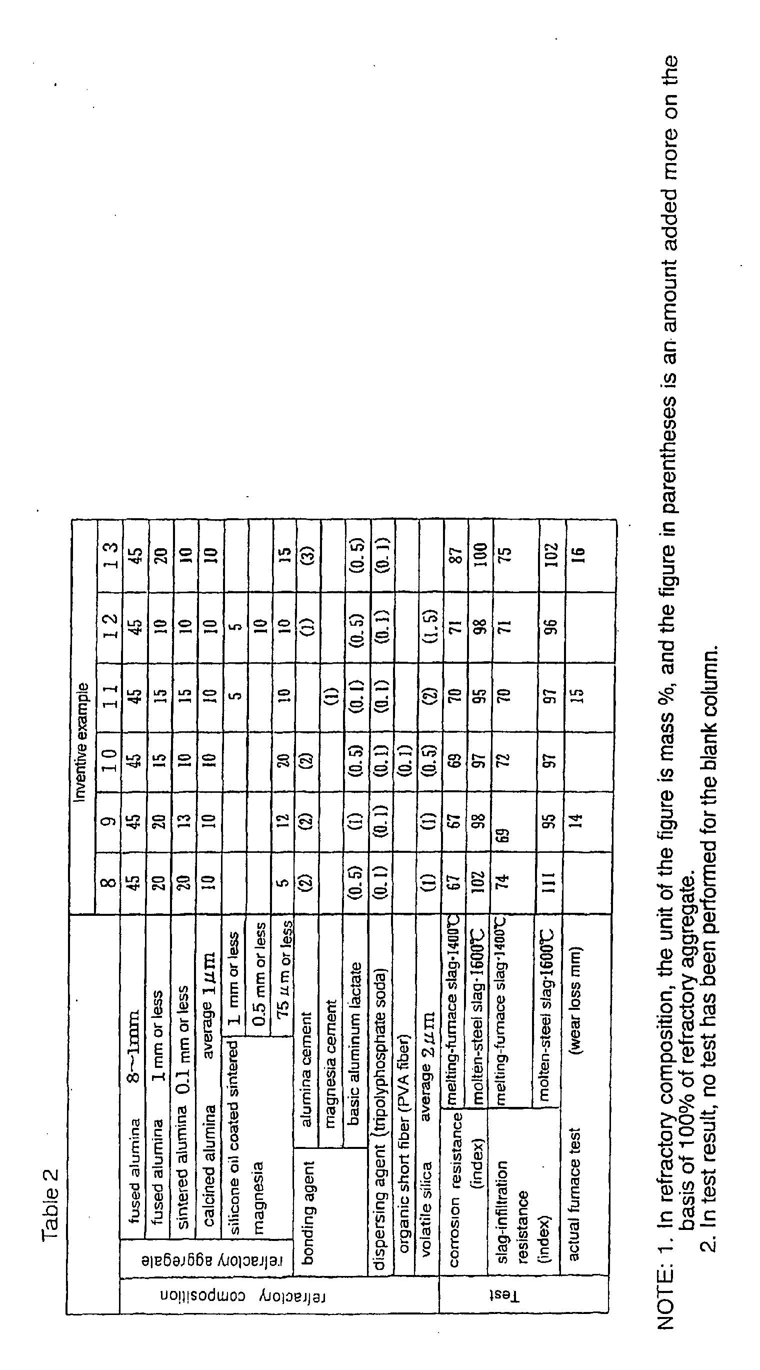

In the test using a melting-furnace slag at 1400°C on the assumption of the melting furnace, Inventive Examples verified significantly enhanced effects on both corrosion resistance and slag-infiltration resistance. The test result proves that these effects on corrosion resistance and slag-infiltration resistance have correlation with improved durable life in the actual furnace operation.

In the rotary erosion test using a molten-steel slag at 1600°C on the assumption of the molten-steel vessel, even the materials in Inventive Examples do not have any significant effect on corrosion resistance and slag-infiltration resistance. The organic silicon compound is a fusible substance, and thereby some of the examples have deteriorated corrosion resistance.

As above, the significantly enhanced slag-infiltration resistance according to the present invention is a peculiar effect yielded only in the application for waste melting furnaces.

Inventive Examples-8 to 13 relate to refractories using basic aluminum lactate as the bonding agent. These Examples show further enhanced corrosion resistance and slag-infiltration resistance. Further, Inventive Examples containing volatile silica added therein show further excellent corrosion resistance.

Comparative Example-1 using magnesia having no coating of the organic silicon compound, and Comparative Example-2 having a lower ratio or 33 mass % of the magnesia coated with the organic silicon compound to the entire magnesia components (a ratio of the magnesia coated with the organic silicon compound to the refractory aggregate is 4 mass %) have lower corrosion resistance and slag-infiltration resistance.

Comparative-3 containing a less amount of magnesia has lower corrosion resistance. Comparative-4 using magnesia containing volatile silica and having no coating of the organic silicon compound has lower corrosion resistance. Comparative-5 containing an excessive amount of volatile silica has lower corrosion resistance.

### INDUSTRIAL APPLICABILITY

The present invention achieves excellent durable life in waste melting furnaces. The non-chromium refractory according to the present invention can solve the problem of environment pollution with satisfactory durable life equivalent to chromium-containing refractories. In view of the need of melting furnaces for waste treatment and the strong demand for improving environmental problems, the present invention has significantly high value.

## Claims

1. A castable refractory for waste melting furnaces, comprising a refractory aggregate containing 5 to 50 mass % of magnesia with the remainder being primarily alumina, and more additive such as a bonding agent and a dispersing agent, wherein 50 mass % or more of said magnesia is composed of magnesia particles each having a surface coated with an organic silicon compound.

2. A castable refractory for waste melting furnaces as defined in claim 1, wherein a part or all of said bonding agent is an aluminum oxycarboxylate.

3. A castable refractory for waste melting furnaces as defined in claim 1 or 2, wherein said organic silicon compound is silicone oil.

4. A castable refractory for waste melting furnaces as defined in either one of claims 1 to 3, wherein said refractory aggregate further contains a volatile silica in an amount of 2 mass % or less.

5. A waste melting furnace comprising a lining formed of a castable refractory as defined in either one of claims 1 to 4.
